# EUROPEAN PATENT APPLICATION

(11) **EP 4 664 383 A1**
(43) Date of publication of application: **17.12.2025**
(21) Application number: 25176816.4
(22) Date of filing: 15.05.2025
(51) Int. Cl.: G06Q 40/04, G06F 9/54, G06F 11/3698

(54) **TRANSACTION PROCESSING SYSTEM ARCHITECTURE ENABLING REAL-TIME INTER-INSTANCE REPLICATION OF BOTH MESSAGES AND MESSAGING BEHAVIOR**

(30) Priority: 13.06.2024 US 202418742491
(71) Applicant: Chicago Mercantile Exchange Inc., Chicago IL Illinois 60606 (US)
(72) Inventor: SONI, Pritesh, Chicago, 60606 (US); KONDURU, Dileep Chakravarthi, Chicago, 60606 (US); COFFEY, Matthew, Chicago, 60606 (US); REDDY, Nagesh, Chicago, 60606 (US)
(74) Representative: Boult Wade Tennant LLP

(57) **Abstract**

The disclosed embodiments relate to a system, which may also be referred to as an architecture which enables replication of inputs received by an application of an instance of a transaction processing system, i.e., a primary or production instance, and communication of those replicated inputs to an application, which may modified or different, of another instance of the transaction processing system, i.e., a secondary, shadow or test instance. The disclosed embodiments provide a necessary degree of incoming message stream replication to the secondary instance with minimal additional latency and minimal additional opportunities for failure which may impact the primary instance.

## Description

### BACKGROUND

Testing of modifications to mission critical latency sensitive computer implemented applications which process, e.g., statefully or otherwise, one or more real-time streams of arbitrarily transmitted messages, with varying content and relationships with prior transmitted messages and received at varying volumes and frequencies, is complex as it is difficult to create realistic streams of test messages which mimic actual message streams and behaviors, e.g., as to the possible variations in content, inter-message relationships, volume and/or timing, and thereby fully exercise and test the system prior to deployment into a production environment. Accordingly, the system under test may not be fully exercised, i.e., tested, as it would be if it were deployed in production, creating a risk of a latent or other defect which may be found only once the system is deployed into production.

Deploying a test system in parallel with the production system and replicating the incoming message streams therebetween may provide a realistic environment in which to test the test system. However, such replication may not be capable of fully replicating the characteristics or behavior of the incoming message streams, may introduce additional undesired latency to the processing of the incoming messages by the production system and/or may introduce an additional opportunity for a failure which may impact the production system.

Accordingly, there is a need for a system for testing modifications to mission critical latency sensitive computer implemented applications which provides a necessary degree of incoming message stream replication with minimal additional latency and minimal additional opportunities for failure which may impact the production system.

### BRIEF DESCRIPTION OF THE DRAWINGS

Fig. 1 depicts a block diagram of a transaction processing system architecture according to some embodiments.
Fig. 2 depicts a general computer system, according to some embodiments.
Fig. 3 depicts a flow chart showing the operation of the system of Fig. 1, according to some embodiments.
Fig. 4 depicts a block diagram of an example implementation of a transaction processing system architecture according to some embodiments.
Figs. 5 and 6 depicts example operation of the transaction processing system architecture or Figs. 1 and 4.

### DETAILED DESCRIPTION

The disclosed embodiments relate to a system, which may also be referred to as an architecture, which enables replication of inputs received by an application of an instance of a transaction processing system, i.e., a primary or production instance, and communication of those replicated inputs to an application, which may be a modified, different, or redundant instance of the transaction processing system, i.e., a secondary, shadow or test instance, or a wholly different application. The disclosed embodiments provide a necessary degree of incoming message stream replication, as to, for example, content and behavior, to the secondary instance with minimal additional latency and minimal additional opportunities for failure which may impact the primary instance. The disclosed embodiments enable testing of modifications to the manner in which the application processes inputs, modifications to one or more of the components of the application which process those inputs or which otherwise enable operation of the application, and/or the processing environment in which the application is deployed. The disclosed embodiments may be further used to replicate the inputs to a different application for substantially parallel processing of those inputs with that of the primary instance. Outputs of the application under test may be discarded or otherwise captured for evaluation of the operation of the test system, or for other purposes.

For example, there may be many situations where it is beneficial to perform tests with live customer data without requiring an application to be deployed in production. Historic approaches to this type of testing have involved the creation of a shadow version of each application (e.g., individual shadows of a message gateway, match engine, etc.). Unfortunately, the individualistic nature of this approach makes it difficult to get a holistic view of communications across multiple applications and, since the applications are blind to one another, there can be problems when there are changes in underlying languages or in communication paths between one or more of the applications. The disclosed embodiments create an improved architecture with a shadow system that replicates communications in a way that preserves, for example, the sequence and format of the messages without requiring customers to create separate parallel connections to individual non-production applications.

An example system which may be implemented using the disclosed embodiments is an electronic transaction processing system, such as an electronic trading system, which processes electronic transactions received from traders, e.g., orders to buy or sell a quantity of one or more products, such as a financial instrument, e.g., futures and options contracts or other derivative or equity instruments, at a price. Such an electronic trading system may operate in a stateful and deterministic manner and may be configured to receive incoming orders to buy or sell different products and attempt to match those orders with one or more previously received but not yet fully satisfied, or canceled, orders counter thereto, which may be stored in a database or data structure (indicative of a state of a market for the subject product), in order to form a transaction therebetween, the system further generating electronic response messages indicative of the result(s) of the attempt which are then electronically communicated back to the traders. At any given time, the state of the electronic trading system may be deterministic, i.e., dependent upon the ordered sequence of receipt transactions where the current state is represented by the aggregate of the currently stored one or more previously received but not yet fully satisfied, or canceled, orders counter thereto. As orders are generated by traders, which may number in the thousands or more, for different products, which may also number in hundreds or thousands, based on their own trading strategies which may be manual or automated and may incorporate various information sources and/or historical data, including the current or past state(s) of the electronic trading system, the content, inter-order relationships, volume and/or frequency with which orders may be received by an electronic trading system may be substantial and fluctuate/vary over time. An example of such an electronic trading system is described in U.S. Patent Application Serial No. 18/399,917, filed on December 29, 2023, and entitled "FAULT TOLERANT ARCHITECTURE" and U.S. Patent Application Serial No. 18/399,922, filed on December 29, 2023, and entitled "FAILURE RECOVERY IN A FAULT TOLERANT ARCHITECTURE", both of which are incorporated by reference herein.

It will be appreciated that the disclosed embodiments may be applicable to any system which processes, statefully or statelessly, one or more real-time streams of arbitrarily transmitted messages, with varying content and received at varying volumes and frequencies, where it may be difficult to create realistic streams of test messages which mimic actual message streams and the behavior(s) thereof, e.g., as to the possible variations in content, inter-message relationships, volume and/or timing, and thereby fully exercise and test the system.

As described, transaction processing systems may rely upon messages which are exchanged or otherwise communicated, such as via a network, e.g. the Internet, between the transaction processing system and the users of that system, and/or between other systems, to facilitate/implement the functionality of the transaction processing system. This exchange of messages may utilize particular communication protocols which may be standardized and well publicized so as to ease use of the systems, to ensure compatibility with other systems and communications media, and/or to facilitate use, development of and/or interaction with third party components. Multiple types of messaging protocols may be used, in combination and/or for different purposes. These protocols may be further defined to provide for efficient and/or low latency use of the communication medium, support for varying types and/or sizes of messages, secure transmission and/or reliable delivery of the messages communicated therewith.

A message protocol, also referred to as a communication protocol, generally specifies a set of rules and descriptions that detail how data should be structured, e.g. logically and/or physically, to allow for, or otherwise govern, transmission over a communications medium, across a network and/or between or within devices. Communication protocols exist that allow for the transmission of many different types of information and typically define or otherwise specify how the data should be structured, how to detect errors in the transmission of the data, the rate, or range thereof, of transmission for the data, how the data is transmitted, as well as other aspects of the mechanics of communication or combinations thereof.

To facilitate communication between computer systems, the communications protocols used thereby may be implemented according, or in a manner similar, to the Open Systems Interconnection ("OSI") reference model. The OSI model conceptualizes a layered abstraction structure to handle the packaging and transmission of data between/across various network devices. The OSI model generally specifies seven different layers, each of which may also be referred to as an abstraction layer and the collection of layers, or subsets thereof, may be referred to as a protocol stack, where each layer has a particular set of communication protocols which will work on that particular layer and allow for communication with the adjacent layers. It will be appreciated that the terms "layer" and "protocol stack" may also refer to the computer software programs/components which implement the various model layers or combinations thereof. These layers include a physical layer, a data link layer, a network layer, a transport layer, a session layer, a presentation layer, and an application layer. It will be appreciated that the layered structure may be implementation dependent and that fewer or more layers may be defined, e.g. some layers may not be implemented, some of the functionality of one layer may in fact be implemented in another, e.g., proximate, layer, the functionality of multiple layers may be combined into a single layer or the functionality of a single layer may be further divided among additional/multiple layers.

According to the OSI model, the physical layer deals with the electrical, or optical, and physical requirements for devices engaged in data transmission. The data link layer is the protocol layer that transfers data between adjacent network nodes in a wide area network (WAN) or between nodes on the same local area network (LAN) segment (not to be confused with a TCP segment described below) and provides the functional and procedural means to transfer data between network entities. The network layer provides the functional and procedural means of transferring fixed or variable length data sequences from one node to another connected to the same network. The transport layer provides the functional and procedural means of transferring variable-length data sequences from a source to a destination host via one or more networks. The session layer controls the dialogues between computers by establishing, managing, and terminating the connections, i.e. sessions, between local and remote applications. The presentation layer establishes context between application-layer entities, in which the application-layer entities may use different syntax and semantics if the presentation service provides a mapping between them. The application layer is the OSI layer closest to the end user or business logic and interacts with software applications on a user or server computer, which means both the OSI application layer and the user may interact directly with a software application. Among other attributes, the OSI model, and accompanying protocols compliant therewith, facilitates both unreliable and reliable communication, i.e. protocols which may or may not include mechanisms that detect and notify a user or other component if the delivery of data fails.

An example protocol that is used to implement the transport layer of the OSI model is the Transmission Control Protocol (TCP). TCP is known as a reliable protocol and is used in conjunction with the Internet Protocol (IP), e.g. IPv4 or IPv6, a typical protocol used to implement the network layer. According to TCP, data transmitted between computers is organized into segments, which may be communicated, e.g., using the IP protocol, using, or otherwise encapsulated in, one or more packets, each of which identify the source of the data being transmitted and the destinations thereof, as well as may include a data payload comprising the data being transmitted, or a portion thereof, e.g., one or more TCP segments or portion thereof. Each packet used to communicate a segment includes a packet header and, optionally, a payload, e.g., all or a portion of a segment. TCP is considered a reliable protocol because it uses sequence numbers to identify each segment of data that is sent from one computer to another computer so that all of the segments may be accounted for, i.e. the sequence numbers assigned to each segment identify the offset within a stream of data for which a particular segment contains data such that lost data may be identified and/or caused to be retransmitted. The sequence number identifies the order of segments sent from each computer so that the data can be reconstructed in order, regardless of any segment reordering, or segment/packet loss, that may occur during transmission from device to device as the packets comprising the segments traverse the network infrastructure. TCP uses acknowledgements sent by the receiver of data to tell the sender of that data that the data has been received by the receiver. In the event of packet loss, resulting in a missing or incomplete segment carried thereby, TCP allows for implementers of the protocol to choose how packet loss is handled. In one implementation, the receiver of the packets who detects packet loss may request that the sender resend only the missing packet(s). In another implementation, the receiver of the packets who detects packet loss may request that the sender resend all of the packets including the missing packet(s) and packets already received from a particular demarcation point, e.g. sent since the opening of a connection or sent since a loss was detected. Additionally, TCP uses IP to effectuate the actual delivery of the data packets comprising the segments that are sent by each computer over a network. The combination of TCP/IP allows for transmission of data over a network, such as the internet, in a reliable manner.

An example of a network that uses TCP/IP to exchange data, as packets or segments (broken up into packets), between nodes on the network is a packet switched network. A packet switched network is a network that employs packet switching, a transmission process that involves breaking up a data message, i.e., a TCP segment, into multiple packets and transmitting each packet along the network from a source to a destination. The path that the packets take along the network may cover multiple different nodes on the network. The packets do not need to travel the same path from source to destination. For example, given a message or segment consisting of packets 1, 2, 3, and 4 with a source node of A and a destination node of E for the message, packet 1 may travel from node A to node B to node E, whereas packet 2 may travel from node A to node C to node E, and so on. An example of a packet switched network is the Internet, or a Local Area Network (LAN). Using TCP/IP, as described herein, whether the packets traverse the same path from the sender to the receiver or not, and/or whether packets are delivered out of order due to inequities in the latency of different paths utilized, is irrelevant as the TCP protocol ensures delivery and facilitates reordering of the packets, and reconstitution of segments, upon receipt into the order as transmitted.

The TCP protocol is a reliable protocol, meaning that the TCP protocol ensures the delivery of all packets which comprises the segments being transmitted. Part of how the TCP protocol ensures delivery of all packets is by using a three way handshake to establish a connection. The three way handshake involves a sending node sending a message to a receiving node that the sending node is ready to transmit data and wants to open a logical connection with the receiving node. The receiving node receives the request to open a connection and sends its own acknowledgement of the request. The sender and receiver then begin transmitting along the connection, each using an initial sequence number for their side of the connection. All information that is transmitted is broken up into segments, and each segment has a timer associated with it. If a sender does not receive acknowledgment that a segment has been received before the timer for that segment runs out, the sender resends the segment. On the receiving end, the receiver of the segments will reorder segments into the proper order if need be, because, for example, some segments timed out and had to be retransmitted out of order, or the segments were transmitted via different network paths having varying latency allowing some segments to overtake other segments to arrive first.

User Datagram Protocol (UDP) is as another Transport Layer protocol, which is an alternative to TCP. UDP is not, as opposed to TCP, a reliable protocol. UDP is connectionless, and makes a best effort for transmission. UDP does not use a handshake system between sender and receiver. UDP is typically used for systems where dropped packets are preferable to waiting for delayed packets, or segments of data. Typically, the data messages transmitted via UDP are referred to as datagrams, as opposed to segments.

A lower layer down from the Transport and Network Layers is the Data Link Layer which, as described above, defines the protocol to establish and terminate a connection/session between two physically connected devices. Ethernet is an example of a data link layer protocol that can work in conjunction with the protocols which implement the other OSI layers, such as the TCP/IP protocols used for the Transport and Network layers. Ethernet describes how networked devices can format data for transmission to other network devices on the same network. Ethernet organizes the data to be transmitted into transmissible units, referred to as Ethernet Frames, each of which identify the Ethernet source of data and Ethernet destination for the data, as well as include a data payload carrying, depending upon the amount, all or a subset of the data to be transmitted. An Ethernet Frame comprises a source and destination address, where the source and destination addresses correspond to Media Access Control addresses (or MAC addresses) for nodes on the network. The data payload is where any other headers for other protocols may be located as well as any data that may ultimately be used by applications. A TCP segment, or more accurately the IP Packet(s) used to convey it, as described above, may be transmitted over an Ethernet compatible network using one or more Ethernet frames.

The Application Layer of the OSI Model is the layer of the OSI model closest to an end user or business logic, and is where applications/business logic and end user processes are implemented that deal with or otherwise process the data transmitted from the bottom layers to the top layers. Some example protocols that handle data on the Application Layer are HTTP, SMTP, etc. World Wide Web browser programs are an example of an Application layer program. In the context of electronic financial markets, the Financial Information Exchange ("FIX") protocol is an Application layer protocol (as well as a session and presentation layer protocol) which may be used with financial systems and financial trading software applications. The FIX protocol comprises a specification for standardized and streamlined real-time exchange of information related to securities transactions and markets.

In one implementation as described herein, the architecture of an electronic transaction processing system, such as an electronic trading system, which processes ordered sequences of electronic transaction request messages, comprising transaction requests, e.g., orders to trade, received via an electronic communications network from one or more sending devices, e.g., trader computer systems, may be implemented in a layered manner as described above and, in addition to the actual network/communications hardware/software of the computer/server, may logically comprise three primary components: a network component/layer, an application/business logic component/layer, and an intermediate buffered communication component/buffer layer therebetween.

The network component/layer, which may be implemented in software, hardware, or a combination thereof, is the interface to the electronic communications network hardware/software of the computer/server on which the system is implemented and implements the specific network communications protocols, e.g., TCP/IP, to receive the electronic request messages, e.g., data packets, extract, and if necessary assemble, the transaction requests therefrom, e.g., from the segments carried via the packet payloads, and pass the extracted transaction requests to the business logic component, described below. The network component further receives the results of the processing of transactions, forms them into one or more network compatible electronic response messages, e.g., segments carried via data packets, and transmits those electronic response messages to the recipients thereof via the electronic communications network.

In an electronic trading system implementation, the network component/layer further implements, such as by implementing a sequencer component, the deterministic operation of the system, i.e., it determines the relative order/sequence of receipt of each extracted transaction message with respect to the other received transaction messages and ascribes that ordering thereto, e.g., by adding sequencing information, such as a time stamp or other sequence data, to the transaction messages as they are received, this sequence data then being passed along therewith to the application/business logic component/layer, as described herein, such that the application/business logic component/layer is able to process the transaction messages in the ascribed ordering regardless of whether those messages are delivered thereto in a different order. In alternative deterministic implementations, the sequencer component may be implemented, or otherwise the sequencing of incoming transactions may occur, within the network interface hardware/software of the computer/server on which the system is implemented, e.g., within the Network Interface Card (NIC).

The network component/layer may be seen to encompass one or more of the physical layer, the data link layer, the network layer, the transport layer, the session layer, and the presentation layer as described above and implement session protocols, reliability protocols, etc., e.g., TCP, to establish reliable communications sessions with senders and recipients to ensure that the electronic request and response messages are reliably transmitted/received, e.g., assembles multi-part messages, confirms message receipt, requests missing messages, etc. In one implementation, the described network layer may not include the physical layer or the data link layer as those may be implemented by the server computer on which the network component is itself deployed.

Generally, the network component/layer is part of the layered architecture described above which absolves, via abstraction, the business logic component/application from having to deal with the intricacies of communicating over the electronic communications network. In an electronic trading system implementation, the network layer may implement, as described above, deterministic operation thereof, ascribing a sequence or ordering to the incoming transaction requests based on their time of receipt relative to other incoming requests and communicating this information to the business logic component, e.g., to support first in first out (FIFO) priority in processing multiple transactions requests competing for the same opportunity which may be substantially simultaneously received. To the extent that the business logic/application component performs any of its processing with respect to individual connections or sessions between one or more traders and the electronic trading system, this information is also passed by the network component to the business logic/application component. In addition, the network layer may implement, or otherwise monitor and report to the business logic component, message characteristics or messaging behavior, such as that of a particular sender to, for example, enable the application layer to monitor such characteristics or behavior, e.g., to determine compliance with system policies or otherwise detect message characteristics or messaging behavior, unintentional or otherwise, which may degrade system performance, undermine or manipulate message sequencing, or otherwise violate communications policies of the system, such as by sending an excessive volume and/rate of messages or otherwise manipulating the network protocols.

The business logic component/layer, i.e., which may also be referred to herein as the application, comprises the processing logic, which may be implemented by one or components, which processes the extracted transaction requests in accordance with one or more business/processing rules, and generates the results therefrom in accordance with the defined business process or set of processing rules. The business logic component may be implemented at the application layer as describe above. In one embodiment, the business logic/application layer may be implemented in Java or other suitable application-level programming language. For example, in an electronic trading system, the application or business logic implements the attempted matching, e.g., using a match engine component and order book data base, of received incoming orders, in the order of receipt, to buy or sell different products with one or more previously received but not yet fully satisfied, or canceled, orders counter thereto, which may be stored in a database or data structure (indicative of a market for the subject product), in order to form a transaction therebetween, and generate electronic response messages, e.g., using a market data generator component, indicative of the result(s) of the attempt for communication back to the traders.

In order to accommodate differences between a rate at which incoming electronic request messages may be received and/or a rate at which electronic response messages can be transmitted by the network component, which may vary over time, and a rate at which the business logic component/application may process transaction requests and generate the results thereof, an intermediate buffered communication component, comprising a buffer storage/memory, may be implemented therebetween to temporarily store the extracted transaction requests and/or processing results, when they are being produced faster than they can be consumed, until the business logic component or network layer is able to process them. From the layered perspective, the intermediate buffered communication component may be part of either the network or the application layer or a combination thereof.

Generally, the disclosed embodiments replicate incoming transaction messages, and other data characteristic thereof, e.g., the deterministic sequence ascribed thereto, communicated to a primary/production system which may be received from, for example, traders and/or system administrators, as well as the semantics/patterns/timing thereof, which are then communicated to, for example, a modified version of the business logic of the transaction processing system, e.g., for testing purposes. That is, in one embodiment, everything communicated by the network layer to the application/business logic component via the buffered communication component is replicated to the secondary/shadow system such that the application/business logic component of the secondary/shadow system is unaware that it is receiving its inputs via the replication and not from its own network layer. In this manner, the business logic of the transaction processing system need not be modified to implement the disclosed replication.

As will be described, the disclosed embodiments replicate the transaction messages extracted from the network communications, and other data characteristic thereof, as presented, i.e., as they appear, to the business logic/application component, obviating any need to modify the business logic/application component to implement the disclosed replication. Accordingly, the business logic/application component, of either the production or test systems, need not be aware of how the senders/traders connect to the electronic trading system via the electronic communications network, e.g., using their own dedicated network connection or a shared network connection, etc. That is, the business logic/application component simply continues, as it was implemented, to act on whatever data is passed to it via the buffer component but is otherwise unconcerned and unaware of how that data got into the buffers, etc. As will be described, the business logic/application component to be tested receives the replicated transaction messages, including any deterministic sequencing data associated therewith, and other data effectively from the network component of the primary/production system as if those had been extracted and presented/provided by its own network component, i.e., with the same content, including sequencing data, and inter-message timing, etc. As such, for example, the business logic/application component to be tested may be unaware that it has been deployed for testing.

As will be described, this replication occurs in the intermediate buffered communication component wherein a "listener" process/component of a replicator component coupled therewith listens for or otherwise detects when the network layer component stores an extracted transaction message, or other data, therein for communication to the business logic/application component. Upon the detection of a stored extracted transaction message or other data, the replicator communicates copy of the stored extracted transaction message or other data to the intermediate buffered communication component of the test system to be then communicated to the business logic/application thereof as if its own network layer had extracted and stored it.

The replicator component may be a separate component which accesses the intermediate buffered communications component/buffer layer or may be integrated with either the network component or application component. The replicator component may operate independently of the business logic/application and minimize any latency/response time/overhead impact on the business logic/application assuming the processing system, e.g., server, on which the transaction processing system is deployed, has sufficient excess processing capacity to operate both the business logic/application and the separate replicator component without any performance impact on either.

In one implementation, the replicator component would require no alterations to the network component or business logic/application component to support replication, requires no conversion of the replicated messages or data in order for the test business logic/application component to process them, minimizes delay in communicating the replicated messages/data to the test system, and provides a more accurate replication of the incoming messages and messaging behavior, e.g., partial or corrupted messages as well as administrative messages are replicated, as well as inter-arrival rates, such as bursts, are replicated as well.

As described, the disclosed embodiments effect replication between the network component and the business logic/application component using a modified intermediate buffered communications component. While this may result in the network component of a test system instance not being tested, the disclosed embodiments require no changes to the business logic/application component to support the replication as described. By not, for example, altering the business logic/application component to replicate and publish incoming transactions, the performance of the business logic/application component is not affected and additional points of failure are not introduced therein.

In one implementation, the replicator component is implemented in software. Alternatively, the replicator component may be implemented in hardware or a combination of hardware and software. For example, the replicator component may utilize direct memory access mechanisms, such as Remote Direct Memory Access (RDMA), in order to enable the shadow instance, i.e., a replication component thereof, to access the memory of the production instance in which the data being transferred between the network and application layers of the production system via the intermediate buffers is stored, e.g., in ring buffer data structures, so as to be able to retrieve the data stored therein as described. Alternatively, the replication component of the production instance may use RDMA to inject the data from the production instance's buffers, e.g., ring buffer data structures, into the ring buffers, i.e., the memory in which they are implemented, of the shadow instance. Direct memory access mechanisms enable the network component to transfer data received from the network directly to memory, e.g., of the shadow instance, eliminating the need to copy data between application memory and the data buffers in the operating system. Such transfers require no work to be done by CPUs, caches, or context switches, and transfers continue in parallel with other system operations, thereby reducing latency in message transfer.

Furthermore, by not replicating incoming messages as they are received by the network layer of the primary instance, the disclosed embodiments do not introduce any latency into the incoming network traffic and need not manage the intricacies of the network protocols such as to manage the connections, e.g., TCP connections, or reliability protocols, e.g., the acknowledgement and retransmission process, or otherwise introduce a risk of disrupting those protocols.

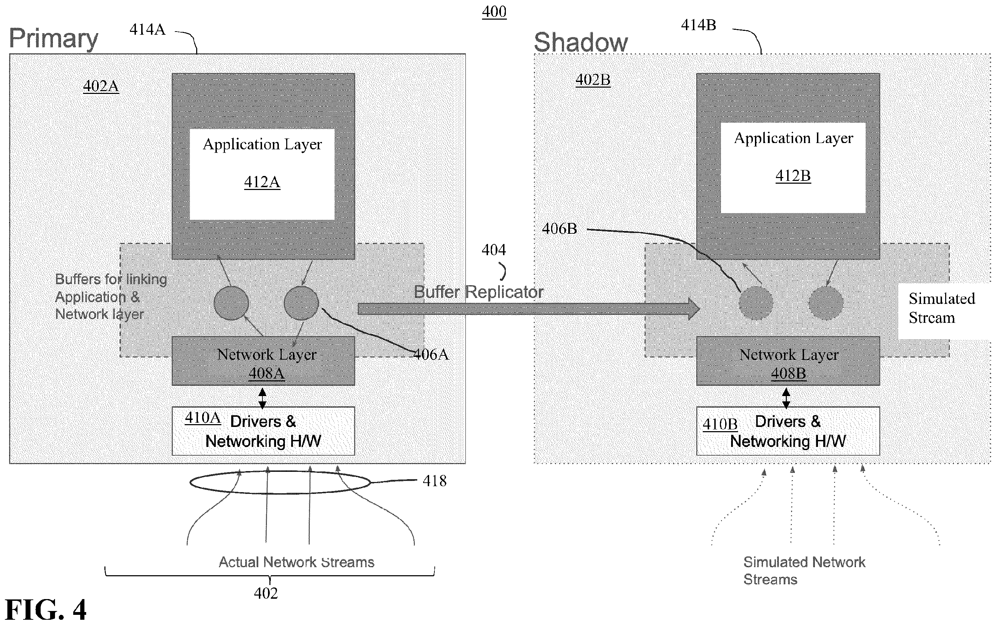

Figure 4 depicts a block diagram of an example implementation 400 of the disclosed embodiments which may be used, for example, to test an electronic trading system as described herein. In the example implementation, instances of the transaction processing system 402A, 402B are configurable as either a production instance 402A or a shadow instance 402B. Each instance 402A, 402B may be implemented in a different processing environment 414A, 414B, such as on a different server, different virtual machine of the same or different server, different data center, and/or different processing deployment, such as on-premises vs cloud/shared-multi-tenant, or combinations thereof. As a production instance 402A, the replication logic 404 is configured to sense messages (listen for any/all messages or data added to the buffer layer 406A by the network layer 408A which it receives via the network interface 410A (network interface card or other hardware/software interface of the computer on which the instance 402A is deployed) from various senders (not shown) via one or more electronic communications networks 418 coupled therewith, such as directly connected traders, traders connected to a shared connection or system administrators, including transaction messages, admin messages, status messages or other data passed to the business logic 412A, and replicate to a receiver 402B (which may be a shadow instance or some other application such as a recorder, another application, etc.) in real time. When configured as a shadow instance 402B, the replication logic 404 is configured to listen for messages from a production instance 402A and insert/inject them into the message flow, i.e., into the buffer layer 406B of the shadow instance, in real time, i.e., as they come in. The network layer of the shadow instance 402B may be turned off or disconnected (or, in one implementation, not instantiated). However, as it is not be connected to a network, it would not be storing messages in the buffer layer 406B regardless. In this manner, the Application Layer 412B logically receives simulated network streams, i.e., it is unaware that the messages it is receiving are originating from the network layer 408A of the primary instance as opposed to being received by its own network layer 408B, i.e., from its own network interface 410B.

In one embodiment, each instance 402A, 402B includes all of the components, including the buffer layer 406A, 406B, network layer 408A, 408B, etc. and the computer systems on which the instances 402A, 402B are deployed may each have network interfaces 410A, 410B. In one embodiment, the buffer layer 406B of the shadow instance 402B is identical to the buffer layer 406A of the primary instance 402A. In an alternative embodiment, the buffer layer 406B of the shadow instance 402B is specifically configured for only receiving messages and data replicated from the primary instance 402A via the replication logic 404.

The disclosed architecture may be implemented in a message gateway operated by the electronic trading system, such as the Chicago Mercantile Exchange Inc., that allows for replication of customer traffic patterns as they happen in production by creating a shadow environment, e.g., in order to simulate that replicated traffic in a test instance, that receives all customer messages while preserving the sequence and format of those messages.

As described, the improved architecture is comprised of a networking layer 408A, 408B and an application layer 412A, 412B. The networking layer 408A, 408B is the point of contact for all customers 402, e.g., direct customer connections of latency sensitive customers that don't mind making multiple separate direct connections to different systems, gateways which let non-latency sensitive customers to make one connection to multiple systems, and internal administrative/trading management connections, such as for phone in orders, i.e., not initiated by customer directly, or other administrative tasks/messaging. Communications from senders may be represented as one of three types of events: connect, data and disconnect. The networking layer 408A of the primary instance 402A captures the inbound communications and passes those communications to the application layer 412A via the buffer layer 406A. In one embodiment, the buffer layer 406A comprises one or more ring buffers used to temporarily store the communications until retrieved by the application layer 412A. It will be appreciated that other types of buffers may be used. The networking layer 408A of the primary instance 402A also handles outbound events, including open/close a session port and data. The application layer 412A is designed to receive communications from the networking layer 406A via the buffer layer 406A and interpret/process the received data.

In one embodiment, communication between the networking layer 408A and the application layer 412A occurs through one or more shared memory buffers, such as ring buffers, implemented by the buffer layer 406A that may be, in one implementation, allocated as memory blocks in the networking layer 408A. In one implementation, there may be two ring buffers: an Inbound Ring Buffer and an Outbound Ring Buffer. The Inbound Ring Buffer captures incoming data where the networking layer 408A is the producer and the application layer 412A is the consumer. A dedicated writer thread may be implemented in the network layer 408A to write to this buffer. The Outbound Ring Buffer is used to send data to the customer 402, wherein the application layer 412A is the producer and the network layer 408A is the consumer. A dedicated reader thread may be implemented in the network layer 408A to read/consume from this buffer. Additional buffers may be provided, for example to allow the application layer 412A to send commands to the network layer 408A, e.g., for opening and/or closing ports through the Outbound Ring Buffer, or performing other functions, and allows the network layer 408A to send responses back to the application layer 412A.

A ring buffer is a form of shared memory, which may also be referred to as a circular buffer, circular queue, or cyclic buffer. A ring buffer is a data structure that uses a single, fixed- size buffer as if it were connected end-to-end. This structure lends itself easily to buffering data streams. A property of the circular buffer is that when it is full and a subsequent write is performed, if not otherwise configured to indicate an error, then it starts overwriting the oldest data. The useful property of a circular buffer is that it does not need to have its elements shuffled around when one is consumed. In other words, the circular buffer is well-suited as a FIFO (first in, first out) buffer. For example, ring buffers may be used to compensate for variations/fluctuations between the rate of messages produced by a producer and the rate at which transactions can be processed by a consumer, e.g., the application 412A.

In addition to communicating data between the networking layer 408A and application layer 412A of the production instance 402A, the ring buffers are further configured to allow data to be transferred from the primary instance 402A to a remote, secondary or shadow instance 402B without the primary instance 402A incurring overhead to perform the replication. This results in all inbound messages - regardless of whether the messages are partial or complete messages - being replicated to the shadow instance 402B. By replicating messages in this way, the shadow instance 402B receives all the raw (i.e., unprocessed) data in the same sequence and format as it is received from the networking layer 408A and can look at patterns more holistically than would otherwise be available in a production environment where the application layer 412A works off preprocessed data. This beneficially allows Application Layer 412B of the shadow instance 402B to process patterns as they happen in a production environment and to test one or more integrated applications rather than individual standalone shadow applications as had been done historically.

By designing the disclosed architecture in this way, it becomes much easier to validate applications across different environments, e.g., the shadow instance can replicate production like loads in a cloud environment to validate applications. Moreover, the validations can be run in parallel to existing production environments and do not require message senders, e.g., customers, to separately connect to the shadow instance 402B. The architecture enables both replication of inbound traffic as well as replication of outbound traffic. Further, the disclosed architecture enables, to the extent the networking layer 408A exposes or otherwise provides such information to the application layer 412A, replication of original packet content and characteristics thereof, including packets which contain partial messages or out-of-order messages.

In one implementation, the replicator logic 404 is built either into the buffer layer 406A or application layer 412A avoiding the need for an application separate therefrom to watch the buffer layer 406A and perform the replication function. This avoids the need for an additional application as well as the need to expose the data to an external application. In an alternative embodiment, a separate replicator application may be deployed which accesses the buffer layer 406A to detect when communications are stored and based thereon, replicate those communications as described. In this implementation, the replication process is not in the critical processing path and therefore will not have an impact on the performance, e.g., response times, of the primary instance 402A.

The disclosed architecture may be implemented in different ways depending on where the replicated data from the primary instance 402A buffer layer 406A is injected into the shadow instance 402B. In particular, the replicated communications may be injected into the network layer 408B, i.e., the inputs thereto which would normally receive their inputs from the network 410B, or the buffer layer 406B of the shadow instance 402B. Injecting the replicated communications into the network layer 408B, i.e., the inputs thereof, would require reforming, e.g., demultiplexing, the communications into a form compatible with the input to the network layer 408B, which can be done by a separate component located either in the primary 402A or shadow instance 402B. This implementation would then enable the network layer 408 of the shadow instance 402B to be tested, in addition to the application layer 412B. However, such an implementation would require an additional component to reform the communications and may not be able to replicate all of the network intricacies experienced by the network layer 408B that it would experience in a production environment as was described above.

Accordingly, the disclosed embodiments inject the replicated communications into the buffer layer 406B of the shadow instance 402B. While this avoids the network layer 408B of the shadow instance 402B, and therefore does not exercise/test it, the messaging content and behavior is suitably replicated in a manner which does not impact system performance.

It will be appreciated that when using the disclosed architecture to implement stateful transaction processing systems, such as an electronic trading system, once the primary and shadow instances have been deployed, they may both be initialized or otherwise synchronized to a common initial/starting state, such as a null state, from which the operation and replication may begin as described herein. This may be important when the goal is to compare the operations of the primary and shadow instances to determine, for example, that the shadow instance is performing as expected.

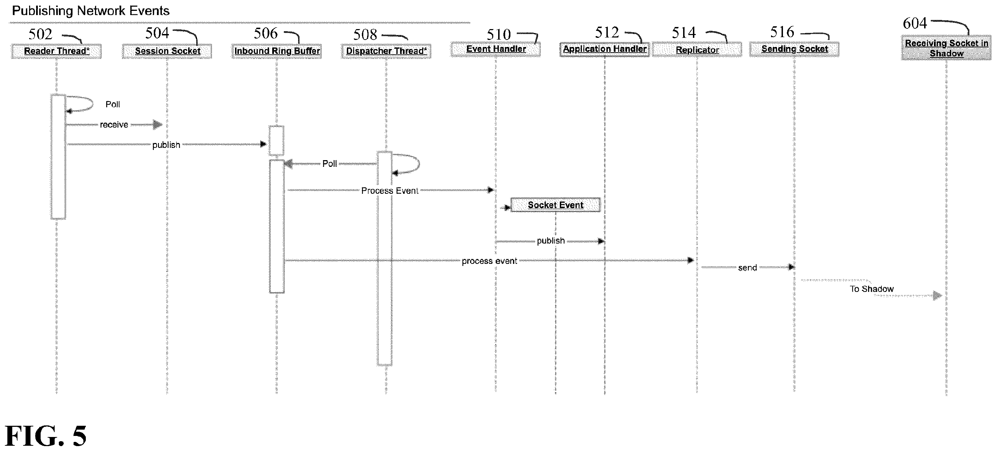

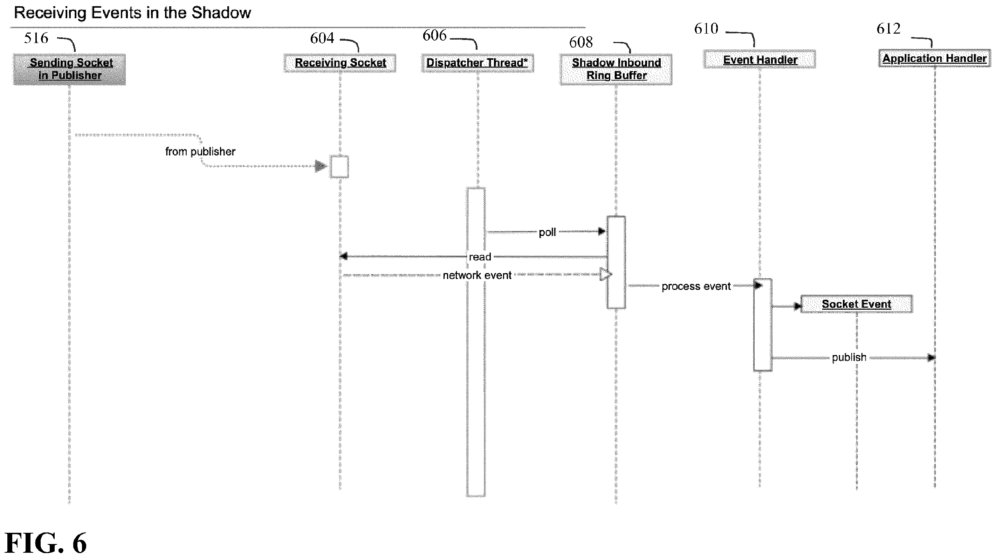

Figures 5 and 6 depict example operation of the disclosed architecture where the interaction between senders/customers and the disclosed system are represented as events. From a network level perspective, there are three types of events on the inbound side - Connect, Data and Disconnect. The network layer 408A doesn't interpret data. It just captures received data, and in the trading system implementation described herein, sequences that data, and passes that to the application layer 412A as described. There are different types of events on the outbound side - open/close a session port and data.

In one implementation, only inbound communications are replicated. A reader thread 502, in coordination with a session socket 504, of the network layer 408A writes incoming communications/data to the ring buffers 506 of the buffer layer 406A of the primary instance. As noted above, in one implementation, there are two ring buffers within the buffer layer 406A that carry data from network layer 408A to the application layer 412A - the inbound buffer and the outbound response buffer. These buffers are polled continuously by a dispatcher thread 508 in round robin fashion. If the polling finds any events in the ring buffer, it passes them to the registered listener, Event Handler 510. The Event Handler 510 converts network events into socket events and publishes them to the application layer, i.e., to the Application Handler 512, e.g., to a thread thereof.

For the replication purposes, every network event a ring buffer passes to the Event Handler 510 is also passed to a replicator 514. The replicator 514 is a process which publishes the contents of the network events to the shadow instance 402B using, for example, a UDP socket, such as via sending socket 516 and receiving socket 604 shown in Fig. 6.

On the shadow side, as shown in Fig. 6, the network layer 408B is entirely removed, either logically ignored or not instantiated. That is, the receiving socket 604 is not connected to a network layer 408B or it is connected to a dormant network layer 408B. In one implementation, the number of ring buffers, and their use, in the buffer layer 406B of the shadow instance 402B are the same but custom ring buffers that are tailored exclusively for shadow purpose are implemented instead which are configured to provide the same view of the network layer 408A, 408B to the application layer 412B of the shadow instance 402B. It will be appreciated that in an alternative embodiment, the ring buffers of the primary 402A and shadow 402B instances may be identically implemented.

Instead, the receiving socket 604 receives events/messages from the sending socket 516 of the primary instance 402A and stores those received events/messages in the inbound ring buffer 608 of the shadow instance 402B as if those events/messages were received from its own network layer as described herein.

In an alternative implementation, when polled by the inbound ring buffer 608 of the shadow instance 402B, the ring buffer 608 reads from the UDP socket 604 (from the primary instance 402A replicator 514) and converts the datagrams into socket events stored therein. These datagrams correspond to the network events published by the primary instance 402A.

As in the primary instance, these buffers 608 are polled continuously by a dispatcher thread 606 in round robin fashion. If the polling finds any events in the ring buffer, it passes them to the registered listener, Event Handler 610 of the shadow instance 402B. The Event Handler 610 converts network events into socket events and publishes them to the application layer/Application Handler 612 of the shadow instance 402B, e.g., to a thread thereof.

As described herein, the sockets 504, 604, dispatcher threads 508, 606, ring buffers 506, 608, Event Handler 510, 610, and Application Handler 512, 612 may be identically implemented instances of the same components except, for example, for the implementation of the interconnection between the primary 402A and shadow 402B instances. For example, the receiving socket 604 or the ring buffers 608 may be identical but configured to operate in a shadow mode. Similarly, the replicator 514 may be implemented in both the primary 402A and shadow 402B instances but configured to be operational only in the primary instance 402A.

As described herein, the disclosed architecture may be used replicate real time communications traffic, i.e., content, timing and patterns thereof, received by a production instance of a system to another system for which it is desired or advantageous to operate on that real time communications stream, such as substantially in parallel with the primary instance. For example, the disclosed architecture may be used to test modifications to a system made in a shadow instance thereof, such as to the business logic or the components which implement the business logic or the hardware and/or software environment in which the business logic is deployed. For example, the disclosed embodiments may be used to test deploying a new version of Java in which the application runs, to test making changes to the operating system such to test new methods or schedules for garbage collection, etc. The disclosed embodiments may be used to test different deployments of the application such as an on premises deployment vs a cloud/shared multi-tenant deployment (where the test system could be either) to confirm that either deployment performs as expected. In one implementation, the shadow instance may be a completely different application, e.g., one where it is desired that it execute substantially in parallel or otherwise synchronized with the primary application with respect to the flow of communications. For example, the shadow application may comprise a tools for certifying compliance with communications rules of the system operators or otherwise detecting compliance with terms of service, etc.

In one implementation, the shadow instance may simply record the communications stream, i.e., content, timing and patterns thereof, received by a production instance, for later playback. As this recording would encompass both message content and time, etc., it may provide additional functionality beyond a mere transaction log. For example, the recorded communications may be used to reproduce a problem only evident from the combination of the communications content and timing thereof. In one embodiment, the recorded communication may be used in stress testing a shadow instance, such as by compressing and amplifying the communications stream, as described in U.S. Patent No. 10,311,516, issued on June 4, 2019, incorporated by reference herein, and communicated that modified communications stream to a shadow/secondary/test system as described herein.

In some implementations, the outputs generated by the shadow instance 402B may be captured for review, such as to evaluate application operation, throughput or response times, i.e., request/response latencies.

In one implementation, the disclosed embodiments are used to implement fault tolerance such as by replicating the incoming communications to a backup system.

The disclosed embodiments are drawn to systems and methods that include specific computing components, each being specially programmed to perform a technological function as part of a greater technological process. The disclosed embodiments include separate system components interconnected in a specific way to implement aspects of the disclosed system and include sufficient specific structure and function and, as such, are not drawn to an abstract idea. The use of software in the disclosed embodiments further makes non-abstract improvements to the computer technology just as hardware improvements can, and the improvements may be accomplished through either route.

The disclosed embodiments are not directed to any method for "obtaining, transforming and determining," which is involved in all computing functionality. The disclosed embodiments and features recited in this regard provide numerous advantages. The instant embodiments do not preempt all methods of "obtaining, transforming, and determining," and are specifically directed towards the disclosed functionality. The disclosed embodiments implement specific rules and features that improve the operation of a particular genus of a technological process, which does not preempt all techniques of obtaining, transforming and determining, which, at some level, is part of every computing process.

While the disclosed embodiments may be discussed in relation to futures and/or options on futures trading, it should be appreciated that the disclosed embodiments may be applicable to any equity, fixed income security, currency, commodity, options, futures, or digital math based asset, e.g., crypto currency, trading system or market now available or later developed. It should be appreciated that a trading environment, such as a futures exchange as described herein, implements one or more economic markets where rights and obligations may be traded. As such, a trading environment may be characterized by a need to maintain market integrity, transparency, predictability, fair/equitable access and participant expectations with respect thereto. For example, an exchange must respond to inputs, such as trader orders, cancelations, etc., in a manner as expected by the market participants, such as based on market data, e.g., prices, available counter-orders, etc., to provide an expected level of certainty that transactions will occur in a consistent and predictable manner and without unknown or unascertainable risks. In addition, it should be appreciated that electronic trading systems further impose additional expectations and demands by market participants as to transaction processing speed, latency, capacity and response time, while creating additional complexities relating thereto. Accordingly, as will be described, the disclosed embodiments may further include functionality to ensure that the expectations of market participant are met, e.g., that transactional integrity and predictable system responses are maintained.

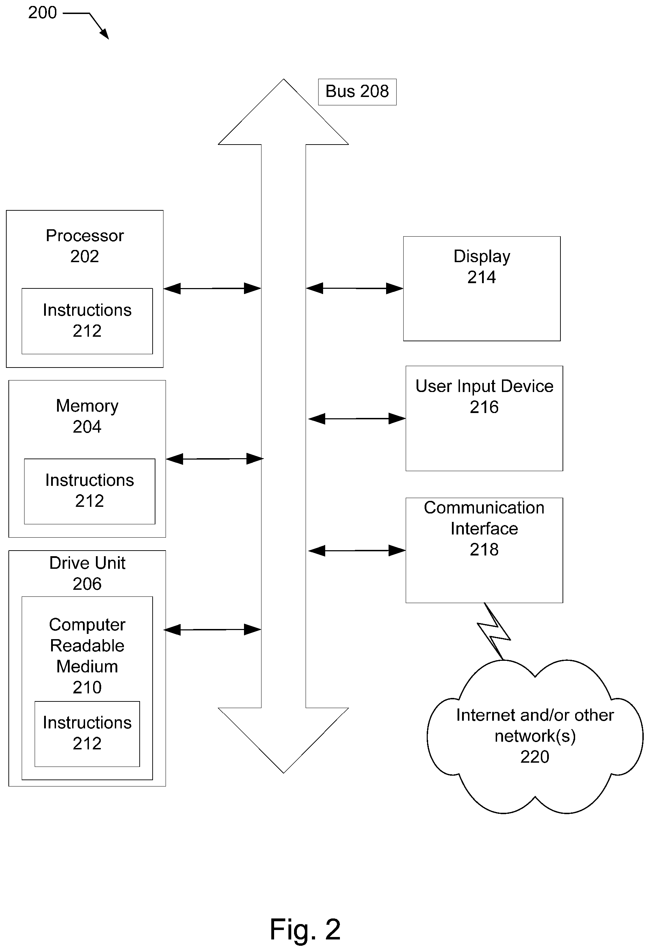

Referring now to Figure 2, an illustrative embodiment of a general computer system 200 is shown which may be used to implement the disclosed architecture or the instances thereof. The computer system 200 can include a set of instructions that can be executed to cause the computer system 200 to perform any one or more of the methods or computer based functions disclosed herein. The computer system 200 may operate as a standalone device or may be connected, e.g., using a network, to other computer systems or peripheral devices. Any of the components discussed herein, such as processor 202, may be a computer system 200 or a component in the computer system 200. The computer system 200 may be specifically configured to implement a match engine, margin processing, payment or clearing function on behalf of an exchange, such as the Chicago Mercantile Exchange, of which the disclosed embodiments are a component thereof. The computer system 200 may be implement a shared multi-tenant processing/operating system, such as may be used in a cloud deployment, of which one or more of the functions described herein are deployed in one or more of the shared processing environments.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 200 can be implemented using electronic devices that provide voice, video or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Figure 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control or any other device operative to interact with the system 200.

In a particular embodiment, as depicted in Figure 2, the computer system 200 may also include a disk or optical drive unit 206 or other volatile or non-volatile data storage mechanism. The disk drive unit 206 may include a computer-readable medium 210 in which one or more sets of instructions 212, e.g., software, can be embedded. Further, the instructions 212 may embody one or more of the methods or logic as described herein. In a particular embodiment, the instructions 212 may reside completely, or at least partially, within the memory 204 and/or within the processor 202 during execution by the computer system 200. The memory 204 and the processor 202 also may include computer-readable media as discussed herein.

The present disclosure contemplates a computer-readable medium that includes instructions 212 or receives and executes instructions 212 responsive to a propagated signal, so that a device connected to a network 220 can communicate voice, video, audio, images or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary embodiment, the computer-readable medium can include a solid-state memory such as a memory card or other package that houses one or more non-volatile read-only memories. Further, the computer-readable medium can be a random access memory or other volatile rewritable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated or otherwise specifically configured hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site, distributed across multiple sites, and/or remotely located, e.g., cloud-based, and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function can be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. A GPP, with respect to certain embodiments, may also refer to specialized processors, such as those particularly suited to implementing applications of machine learning and/or artificial intelligence, such as vector processors or graphics processing units and the like. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks", and a hierarchy of reconfigurable interconnects that allow the blocks to be "wired together", somewhat like many (changeable) logic gates that can be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

To provide for interaction with a user, embodiments, or applicable portions thereof, of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well. Feedback provided to the user can be any form of sensory feedback, e.g., visual feedback, auditory feedback, or tactile feedback. Input from the user can be received in any form, including acoustic, speech, or tactile input.

Embodiments of the subject matter described in this specification can be implemented in a computing system that includes a back end component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

It should be appreciated that the disclosed embodiments may be applicable to other types of messages depending upon the implementation. Further, the messages may comprise one or more data packets, datagrams or other collection of data formatted, arranged configured and/or packaged in a particular one or more protocols, e.g., the FIX protocol, TCP/IP, Ethernet, etc., suitable for transmission via a network 214 as was described, such as the message format and/or protocols described in U.S. Patent No. 7,831,491 and U.S. Patent Publication No. 2005/0096999 A1, both of which are incorporated by reference herein in their entireties and relied upon. Further, the disclosed message management system may be implemented using an open message standard implementation, such as FIX, FIX Binary, FIX/FAST, or by an exchange-provided API.

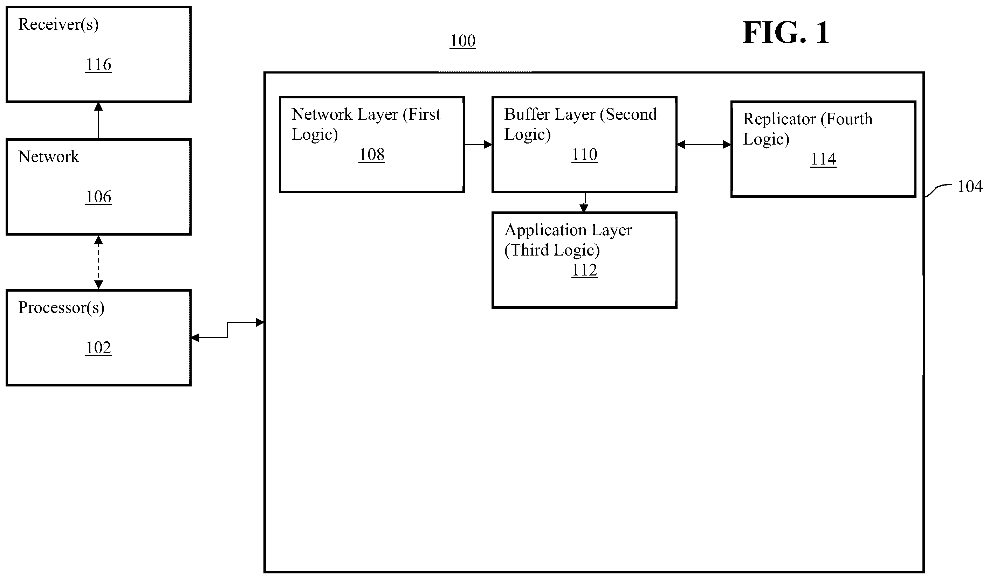

Figure 1 depicts a block diagram of a transaction processing system/apparatus 100, also referred to as an architecture, according to one embodiment, which enables replication of inputs, e.g., transaction messages or other data received by an application of an instance of the transaction processing system architecture, the application, such as an electronic trading system as described herein configured to receive and process electronic transactions in accordance with a plurality of processing rules.

The system 100 includes an electronic communications network interface 108 configured to receive, via an electronic communications network 196 coupled therewith, e.g., using TCP/IP, a plurality of electronic transaction data messages over a period of time, each comprising data indicative of an electronic transaction to be processed by the application, and extract, upon receipt of each electronic transaction data message, the data indicative of the electronic transaction therefrom and store the extracted data indicative of the electronic transaction in an intermediary buffer memory 110 of the instance, coupled between the electronic communications network interface 198 and the application 112, for further communication to the application 112.

The system 100 further includes a processor 114, which may be referred to as a replicator or replication logic, coupled with the intermediary buffer memory 110 and configured to detect whenever data indicative of an electronic transaction has been stored therein, and based thereon, transmit an electronic message comprising a copy thereof from the intermediary buffer memory 110 to one or more receivers 116, such as another instance of the system 100, via the electronic communications network 106, which may be the same or a different network and may use the same, e.g., TCP/IP or different, e.g., UDP, protocol. Wherein the application 112 is unable to discriminate between the data indicative of the electronic transaction as stored in the intermediary buffer memory 110 and the copy transmitted to the receiver 116 if the copy were also stored in the intermediary buffer memory 110.

One or more of the modules/components described herein may be implemented as a separate component or as one or more logic components, such as on an FPGA which may include a memory or reconfigurable component to store logic and a processing component to execute the stored logic, or as first thru fourth logic 108, 110, 112, 114 respectively, e.g. computer program logic/computer executable instruction, stored in one or more memories, such as the memory 204 shown in Figure 2 and described in more detail above with respect thereto, or other non-transitory computer readable medium, and executable by one or more processors 102, such as the processor 204 shown in Figure 2 and described in more detail above with respect thereto, to cause the processor(s) 102 to, or otherwise be operative as described.

In one embodiment, the transaction processing system 100 comprises an electronic trading system, the data indicative of the transaction comprising a request to transact a quantity of a product, the plurality of processing rules configured to cause the application 112 to receive the data indicative of the electronic transaction and attempt to match the electronic transaction with a previously received but not yet fully satisfied electronic transaction to at least partially satisfy one or both the electronic transaction or the previously received transactions and generate result data indicative thereof.

In one embodiment, the electronic communications network 106 and the electronic communications network interface implement a TCP/IP protocol, each of the plurality of electronic transaction data messages comprising one or more TCP/IP packets, the data indicative of the electronic transaction comprising a payload thereof.

In one embodiment, the intermediary buffer memory 110 comprises one or more ring buffers.

In one embodiment, the intermediary buffer memory 110 comprises a shared memory to which both the application 112 and a process 114 separate therefrom, which implements the detecting, have access.

In one embodiment, the processor 114 is further configured to detect whenever the interface 108 stores other data in the intermediary buffer memory 110 and based thereon, transmit a copy thereof from the intermediary buffer memory 110 to the receiver(s) 116 via the electronic communications network 106. In one embodiment, the other data may include data characterizing the receipt of one or more of the plurality of electronic transaction messages, e.g., rate, volume, number of transmissions, etc.

In one embodiment, the receiver 116 comprises a data recorder configured to record the data indicative of the electronic transaction transmitted thereto along with a timing and relationship of the receipt of each of the plurality of electronic transaction messages relative to other of the received plurality of electronic transaction request messages, for later playback of each data indicative of the electronic transaction transmitted thereto in accordance with the timing and relationship of the receipt of each of the plurality of electronic transaction messages relative to other of the received plurality of electronic transaction request messages.

In one embodiment, the receiver 116 comprises another application, different from the application 112 of the instance of the transaction processing system 100, which is configured to process the electronic transactions in accordance with a different plurality of processing rules.

In one embodiment, the receiver 116 comprises another instance 100 of at least the application 112 and intermediary buffer memory 110, the received copy of the data indicative of the electronic transaction being stored in the intermediary buffer memory 110 of the receiver 116 for further communication to the application 112 of the receiver 116 as if stored therein by an instance of the electronic communications network interface 108 of the receiver 116. In one embodiment, the application of the other instance is modified as compared to the application 112 of the instance 100, i.e., it operates/is different from the application 112 of the instance 100. In one embodiment, a plurality of processing rules of the application of the other instance may be different from the plurality of processing rules of the application 112 of the instance 100. In one embodiment, an implementation of the application of the other instance is different from an implementation of the application 112 of the instance 100, each implementing the same plurality of processing rules, e.g., the other application is implemented with a different version of Java. In one embodiment, the other instance is located in a processing environment different from that of the instance, such as a cloud or shared multi-tenant based processing environment.

In one embodiment, the detection and transmission are performed substantially real time so as to substantially replicate the timing and relationship of the receipt of each of the plurality of electronic transaction messages relative to other of the received plurality of electronic transaction request messages.

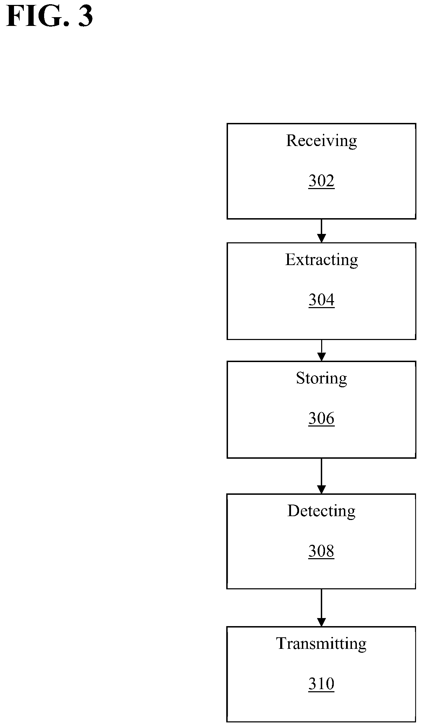

Figure 3 depicts a flow chart showing operation of the system 100. In particular Figure 3 shows a computer implemented method for replicating inputs received by an application 112 of an instance of a transaction processing system 100, the application 112 configured to receive and process electronic transactions in accordance with a plurality of processing rules.

The operation of the system 100 may include: receiving, via an electronic communications network 106 at an interface 108 thereto of the instance of the transaction processing system 100, a plurality of electronic transaction data messages, e.g., TCP/IP messages, over a period of time, each comprising data indicative of an electronic transaction to be processed by the application 112 (Block 302), and extracting, by the interface 108 upon receipt of each electronic transaction data message, the data indicative of the electronic transaction therefrom (Block 304) and storing the extracted data indicative of the electronic transaction in an intermediary buffer memory 110 of the instance of the transaction processing system 100, coupled between the interface 108 and the application 112, for further communication to the application 112 (Block 306); detecting, by a processor 114, also referred to as a replicator or replication logic, coupled with the intermediary buffer memory 110, whenever data indicative of an electronic transaction has been stored therein (Block 308), and based thereon, transmitting an electronic message comprising a copy thereof from the intermediary buffer memory 110 to one or more receivers 116 via the electronic communications network 106 (Block 310), which may be the same or a different network and may use the same, e.g., TCP/IP or different, e.g., UDP, protocol; and wherein the application 112 is unable to discriminate between the data indicative of the electronic transaction as stored in the intermediary buffer memory 110 and the copy transmitted to the receiver 116 if the copy were also stored in the intermediary buffer memory 110.

In one embodiment, the transaction processing system 100 comprises an electronic trading system, the data indicative of the transaction comprising a request to transact a quantity of a product, the plurality of processing rules configured to cause the application to receive the data indicative of the electronic transaction and attempt to match the electronic transaction with a previously received but not yet fully satisfied electronic transaction to at least partially satisfy one or both the electronic transaction or the previously received transactions and generate result data indicative thereof.

In one embodiment, the electronic communications network 106 and the interface 108 implement a TCP/IP protocol, each of the plurality of electronic transaction data messages comprising one or more TCP/IP packets, the data indicative of the electronic transaction comprising a payload thereof.

In one embodiment, the intermediary buffer memory 110 comprises one or more ring buffers.

In one embodiment, the intermediary buffer memory 110 comprises a shared memory to which both the application 112 and a process 114 separate therefrom, which implements the detecting, have access.

In one embodiment, the detecting further comprises detecting, by the processor 114, whenever the interface stores other data in the intermediary buffer memory 110 and based thereon, transmitting a copy thereof from the intermediary buffer memory 110 to the receiver(s) 116 via the electronic communications network 106.

In one embodiment, the other data comprises data characterizing the receipt of one or more of the plurality of electronic transaction messages, such as rate, volume, number of retransmissions, etc.

In one embodiment, the receiver 116 comprises a data recorder configured to record the data indicative of the electronic transaction transmitted thereto along with a timing and relationship of the receipt of each of the plurality of electronic transaction messages relative to other of the received plurality of electronic transaction request messages, for later playback of each data indicative of the electronic transaction transmitted thereto in accordance with the timing and relationship of the receipt of each of the plurality of electronic transaction messages relative to other of the received plurality of electronic transaction request messages.

In one embodiment, the receiver 116 comprises another application, different from the application 112 of the instance 100 of the transaction processing system, which is configured to process the electronic transactions in accordance with a different plurality of processing rules.

In one embodiment, the receiver 116 comprises another instance of at least the application 112 and intermediary buffer memory 110, the received copy of the data indicative of the electronic transaction being stored in the intermediary buffer memory 110 of the receiver 116 for further communication to the application 112 of the receiver 116 as if stored therein by an instance of the electronic communications network interface 108 of the receiver 116.

In one embodiment, the application of the other instance is modified as compared to the application 112 of the instance 100, e.g., it operates/is different from the application 112 of the instance 100.

In one embodiment, a plurality of processing rules of the application of the other instance are different from the plurality of processing rules of the application 112 of the instance 100.

In one embodiment, an implementation of the application of the other instance is different from an implementation of the application 112 of the instance 100, each implementing the same plurality of processing rules. For example, the other application may be implemented with a different version of Java.

In one embodiment, the other instance is located in a processing environment different from that of the instance, such as a cloud or shared multi-tenant based processing environment.

In one embodiment, the detecting and transmitting are performed substantially real time so as to substantially replicate the timing and relationship of the receipt of each of the plurality of electronic transaction messages relative to other of the received plurality of electronic transaction request messages.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims that are intended to define the scope of this invention.

Further embodiments of the invention are highlighted by the following numbered clauses:
Clause 1. A transaction processing system architecture enabling replication of inputs received by an application of an instance of a transaction processing system, the application configured to receive and process electronic transactions in accordance with a plurality of processing rules, an instance of the architecture comprising: an electronic communications network interface configured to receive, via an electronic communications network coupled therewith, a plurality of electronic transaction data messages over a period of time, each comprising data indicative of an electronic transaction to be processed by the application, and extract, upon receipt of each electronic transaction data message, the data indicative of the electronic transaction therefrom and store the extracted data indicative of the electronic transaction in an intermediary buffer memory of the instance, coupled between the electronic communications network interface and the application, for further communication to the application; a processor coupled with the intermediary buffer memory and configured to detect whenever data indicative of an electronic transaction has been stored therein, and based thereon, transmit an electronic message comprising a copy thereof from the intermediary buffer memory to a receiver via the electronic communications network; and wherein the application is unable to discriminate between the data indicative of the electronic transaction as stored in the intermediary buffer memory and the copy transmitted to the receiver if the copy were also stored in the intermediary buffer memory.
Clause 2. The computer implemented method of clause 1, wherein the transaction processing system comprises an electronic trading system, the data indicative of the transaction comprising a request to transact a quantity of a product, the plurality of processing rules configured to cause the application to receive the data indicative of the electronic transaction and attempt to match the electronic transaction with a previously received but not yet fully satisfied electronic transaction to at least partially satisfy one or both the electronic transaction or the previously received transactions and generate result data indicative thereof.
Clause 3. The transaction processing system architecture of clause 1, wherein the electronic communications network and the electronic communications network interface implement a TCP/IP protocol, each of the plurality of electronic transaction data messages comprising one or more TCP/IP packets, the data indicative of the electronic transaction comprising a payload thereof.
Clause 4. The transaction processing system architecture of clause 1, wherein the intermediary buffer memory comprises one or more ring buffers.
Clause 5. The transaction processing system architecture of clause 1, wherein the intermediary buffer memory comprises a shared memory to which both the application and a process separate therefrom, which implements the detecting, have access.
Clause 6. The transaction processing system architecture of clause 1, wherein the processor is further configured to detect whenever the interface stores other data in the intermediary buffer memory and based thereon, transmit a copy thereof from the intermediary buffer memory to the receiver via the electronic communications network.
Clause 7. The transaction processing system architecture of clause 6, wherein the other data comprises data characterizing the receipt of one or more of the plurality of electronic transaction messages.
Clause 8. The transaction processing system architecture of clause 1, wherein the receiver comprises a data recorder configured to record the data indicative of the electronic transaction transmitted thereto along with a timing and relationship of the receipt of each of the plurality of electronic transaction messages relative to other of the received plurality of electronic transaction request messages, for later playback of each data indicative of the electronic transaction transmitted thereto in accordance with the timing and relationship of the receipt of each of the plurality of electronic transaction messages relative to other of the received plurality of electronic transaction request messages.
Clause 9. The transaction processing system architecture of clause 1, wherein the receiver comprises another application, different from the application of the instance of the transaction processing system, which is configured to process the electronic transactions in accordance with a different plurality of processing rules.
Clause 10. The transaction processing system architecture of clause 1, wherein the receiver comprises another instance of at least the application and intermediary buffer memory, the received copy of the data indicative of the electronic transaction being stored in the intermediary buffer memory of the receiver for further communication to the application of the receiver as if stored therein by an instance of the electronic communications network interface of the receiver.
Clause 11. The transaction processing system architecture of clause 10, wherein the application of the other instance is modified as compared to the application of the instance.
Clause 12. The transaction processing system architecture of clause 11, wherein a plurality of processing rules of the application of the other instance are different from the plurality of processing rules of the application of the instance.
Clause 13. The transaction processing system architecture of clause 11, wherein an implementation of the application of the other instance is different from an implementation of the application of the instance, each implementing the same plurality of processing rules.
Clause 14. The transaction processing system architecture of clause 10, wherein the other instance is located in a processing environment different from that of the instance.
Clause 15. The transaction processing system architecture of clause 14, wherein the processing environment of the other instance comprises a shared multi-tenant based processing environment.
Clause 16. The transaction processing system architecture of clause 1, wherein the detection and transmission are performed substantially real time so as to substantially replicate the timing and relationship of the receipt of each of the plurality of electronic transaction messages relative to other of the received plurality of electronic transaction request messages.
Clause 17. A system for replicating inputs received by an application of an instance of a transaction processing system, the application configured to receive and process electronic transactions in accordance with a plurality of processing rules, the system comprising: a processor and a non-transitory memory coupled therewith, the memory having stored therein computer executable instructions that, when executed by the processor, cause the processor to: detect whenever data indicative of an electronic transaction has been stored in an intermediary buffer memory of the instance coupled between an electronic communications network interface of the instance and the application, the electronic communications network interface being coupled with an electronic communications network and configured to receive a plurality of electronic transaction data messages over a period of time, each comprising data indicative of an electronic transaction to be processed by the application, and extract, upon receipt of each electronic transaction data message, the data indicative of the electronic transaction therefrom and store the extracted data indicative of the electronic transaction in the intermediary buffer memory of the instance for further communication to the application; and transmit, based on the detection of data indicative of an electronic transaction has been stored in the intermediary buffer memory, an electronic message comprising a copy thereof from the intermediary buffer memory to a receiver via the electronic communications network; wherein the application is unable to discriminate between the data indicative of the electronic transaction as stored in the intermediary buffer memory and the copy transmitted to the receiver if the copy were also stored in the intermediary buffer memory.

## Claims

1. A computer implemented method for replicating inputs received by an application of an instance of a transaction processing system, the application configured to receive and process electronic transactions in accordance with a plurality of processing rules, the method comprising:
receiving, via an electronic communications network at an interface thereto of the instance of the transaction processing system, a plurality of electronic transaction data messages over a period of time, each comprising data indicative of an electronic transaction to be processed by the application, and extracting, by the interface upon receipt of each electronic transaction data message, the data indicative of the electronic transaction therefrom and storing the extracted data indicative of the electronic transaction in an intermediary buffer memory of the instance of the transaction processing system, coupled between the interface and the application, for further communication to the application;
detecting, by a processor coupled with the intermediary buffer memory, whenever data indicative of an electronic transaction has been stored therein, and based thereon, transmitting an electronic message comprising a copy thereof from the intermediary buffer memory to a receiver via the electronic communications network; and
wherein the application is unable to discriminate between the data indicative of the electronic transaction as stored in the intermediary buffer memory and the copy transmitted to the receiver if the copy were also stored in the intermediary buffer memory.

2. The computer implemented method of claim 1, wherein the transaction processing system comprises an electronic trading system, the data indicative of the transaction comprising a request to transact a quantity of a product, the plurality of processing rules configured to cause the application to receive the data indicative of the electronic transaction and attempt to match the electronic transaction with a previously received but not yet fully satisfied electronic transaction to at least partially satisfy one or both the electronic transaction or the previously received transactions and generate result data indicative thereof.

3. The computer implemented method of any preceding claim, wherein the electronic communications network and the interface implement a TCP/IP protocol, each of the plurality of electronic transaction data messages comprising one or more TCP/IP packets, the data indicative of the electronic transaction comprising a payload thereof.

4. The computer implemented method of any preceding claim, wherein the intermediary buffer memory comprises either:
one or more ring buffers; or
a shared memory to which both the application and a process separate therefrom, which implements the detecting, have access.

5. The computer implemented method of any preceding claim, wherein the detecting further comprises detecting, by the processor, whenever the interface stores other data in the intermediary buffer memory and based thereon, transmitting a copy thereof from the intermediary buffer memory to the receiver via the electronic communications network.

6. The computer implemented method of claim 5, wherein the other data comprises data characterizing the receipt of one or more of the plurality of electronic transaction messages.

7. The computer implemented method of any preceding claim, wherein the receiver comprises a data recorder configured to record the data indicative of the electronic transaction transmitted thereto along with a timing and relationship of the receipt of each of the plurality of electronic transaction messages relative to other of the received plurality of electronic transaction request messages, for later playback of each data indicative of the electronic transaction transmitted thereto in accordance with the timing and relationship of the receipt of each of the plurality of electronic transaction messages relative to other of the received plurality of electronic transaction request messages.

8. The computer implemented method of any one of claims 1 to 6, wherein the receiver comprises another application, different from the application of the instance of the transaction processing system, which is configured to process the electronic transactions in accordance with a different plurality of processing rules.

9. The computer implemented method of any one of claims 1 to 6, wherein the receiver comprises another instance of at least the application and intermediary buffer memory, the received copy of the data indicative of the electronic transaction being stored in the intermediary buffer memory of the receiver for further communication to the application of the receiver as if stored therein by an instance of the electronic communications network interface of the receiver.

10. The computer implemented method of claim 9, wherein the application of the other instance is modified as compared to the application of the instance.

11. The computer implemented method of claim 9, wherein a plurality of processing rules of the application of the other instance are different from the plurality of processing rules of the application of the instance.

12. The computer implemented method of claim 9, wherein an implementation of the application of the other instance is different from an implementation of the application of the instance, each implementing the same plurality of processing rules.

13. The computer implemented method of any one of claims 9 to 12, wherein the other instance is located in a processing environment different from that of the instance and optionally the processing environment of the other instance comprises a shared multi-tenant based processing environment.

14. The computer implemented method of any preceding claim, wherein the detecting and transmitting are performed substantially real time so as to substantially replicate the timing and relationship of the receipt of each of the plurality of electronic transaction messages relative to other of the received plurality of electronic transaction request messages.

15. A transaction processing system architecture configured to perform the method of any preceding claim, an instance of the architecture comprising:
an electronic communications network interface configured to receive, via an electronic communications network coupled therewith, a plurality of electronic transaction data messages over a period of time, each comprising data indicative of an electronic transaction to be processed by the application, and extract, upon receipt of each electronic transaction data message, the data indicative of the electronic transaction therefrom and store the extracted data indicative of the electronic transaction in an intermediary buffer memory of the instance, coupled between the electronic communications network interface and the application, for further communication to the application;
a processor coupled with the intermediary buffer memory and configured to detect whenever data indicative of an electronic transaction has been stored therein, and based thereon, transmit an electronic message comprising a copy thereof from the intermediary buffer memory to a receiver via the electronic communications network; and
wherein the application is unable to discriminate between the data indicative of the electronic transaction as stored in the intermediary buffer memory and the copy transmitted to the receiver if the copy were also stored in the intermediary buffer memory.
